# EUROPÄISCHE PATENTSCHRIFT

(11) **EP 2 687 317 B1**
(45) Veröffentlichungstag und Bekanntmachung des Hinweises auf die Patenterteilung: **06.05.2020**
(21) Anmeldenummer: 12177388.1
(22) Anmeldetag: 20.07.2012
(51) Int. Cl.: B23K 26/70, B23K 26/38, B23K 26/14, B23K 26/04

(54) **Laserbearbeitungsmaschine, insbesondere Laserschneidmaschine, sowie Verfahren zum Justieren eines fokussierten Laserstrahles**
Laser processing machine, in particular laser cutting machine and method for adjusting a focused laser beam
Machine de traitement au laser, en particulier machine de coupe au laser, ainsi que le procédé d'ajustage d'un faisceau laser focalisé

(43) Veröffentlichungstag der Anmeldung: 22.01.2014
(73) Patentinhaber: Bystronic Laser AG, 3362 Niederönz (CH)
(72) Erfinder: Lüdi, Andreas, 3400 Burgdorf (CH); Cathry, Daniel, 3373 Röthenbach bei Herzogenbuchsee (CH)
(74) Vertreter: Schwarz und Baldus Patentanwälte

(56) Entgegenhaltungen:
- WO-A1-2011/035888
- DE-A1-102007 013 623
- DE-A1-102007 048 471
- DE-A1-102009 044 751
- DE-C1- 10 150 129

## Beschreibung

Die Erfindung betrifft eine Laserbearbeitungsmaschine, insbesondere Laserschneidmaschine nach dem Oberbegriff des Anspruchs 1, sowie ein Verfahren zum Justieren eines insbesondere fokussierten Laserarbeitsstrahles bei einer solchen Laserbearbeitungsmaschine nach dem Oberbegriff des Anspruchs 9. Als fokussierten Strahl ist stets der Laserstrahl nach fokussierendem Element (z.B. Fokussierlinse) gemeint.

Wie bekannt, soll der Laserstrahl für einen Schneidprozess bei Laserschneidmaschinen möglichst zentrisch durch die Schneiddüse des Schneidkopfes geführt werden. Da eine laterale Verschiebung der optischen Linsen im Schneidkopf - verursacht durch einen Wechsel der Linse oder des Linseneinschubes - oft eine Verschiebung der optischen Achse zur Folge haben kann, ist ein wiederholter Zentrierungsprozess der Schneiddüse in der Praxis notwendig.

Damit ein Laserstrahl optimal schneidet, müssen die Strahlparameter zum Werkstück passen. Wichtiger Parameter ist dabei auch die Fokuslage des Laserstrahls sowohl in axialer Richtung wie auch in lateraler Richtung. Idealerweise könnten diese Parameter maschinenintegriert gemessen und angepasst werden. Das maschinenintegrierte Messen wäre sinnvoll, da sich die genannte Grösse zeitlich verändern kann. Die Änderungen kommen aufgrund thermischer Instabilitäten entlang der ganzen Strahlausbreitung von Resonator-Endspiegel bis Bearbeitungsfokus zustande. Insbesondere verschmutzte und gealterte Fokussierlinsen bewirken veränderter Fokus in axialer Richtung.

Die Fokuslagenjustage in lateraler Richtung wird auch als Düsenjustage bzw. Düsenzentrierung bezeichnet. Dabei gilt es, die Düsenöffnung mittig zum Laserstrahl (bzw. umgekehrt) zu positionieren. Die Fokuslagenjustage in axialer Richtung dient zur idealen Positionierung des Fokus in Bezug zur Düsenspitze und somit zum zu bearbeitenden Werkstück.

Aus der DE-102007048471 A1 ist ein Verfahren zum Bestimmen der Lage eines durch eine Düsenöffnung einer Laserbearbeitungsdüse hindurch tretenden Laserstrahls relativ zur Öffnung bekannt. Dabei wird der Düsenkörper und der Laserstrahl relativ zueinander entlang der Ausbreitungsrichtung (Z) des Laserstrahls bewegt, bis - infolge der kegeligen Ausbreitung des Laserstrahls - ein Teil der Laserstrahlung aus einem Randbereich des Laserstrahls an einer die Öffnung umgebenden speziellen optischen Streu- oder Spiegelfläche abgestreift wird. Danach wird die Intensität der von der Streu- oder Spiegelfläche reflektierten und gestreuten Laserstrahlung gleichzeitig an einer Mehrzahl von Messflächen detektiert und die an der Mehrzahl von Messflächen detektierten Intensität der Laserstrahlung zum Bestimmen der Lage des Laserstrahls relativ zur Düsenöffnung verglichen. Der abgestreifte Teil der Laserstrahlung wird demnach an der Streufläche diffus gestreut oder an der in radialer Richtung eine Krümmung aufweisenden Spiegelfläche oder der kombinierten Streufläche reflektierte Laserstrahlung aufgeweitet oder fokussiert.

In der obigen Veröffentlichung ist auch eine Laserbearbeitungsdüse offenbart, welche einen Düsenkörper mit einer Düsenöffnung zum Durchtritt eines fokussierten Laserstrahls, sowie eine die Öffnung umgebende, an dem Düsenkörper gebildete Spiegelfläche oder kombinierten Streu-/Spiegelfläche zum Abstreifen eines Teils der Laserstrahlung aus einem Randbereich des Laserstrahls aufweist. Dabei hat die Spiegelfläche oder die kombinierte Streu-/Spiegelfläche in radialer Richtung eine Krümmung.

Gemäss der obigen Technologie werden zum Abstreifen einer Teillaserstrahlung und zum Aufweiten oder Fokussieren der reflektierten Teillaserstrahlung eine an dem Düsenkörper gebildete Spiegelfläche oder kombinierte Streu-/Spiegelfläche mit radialer Krümmung verwendet, was also mehrere komplizierte optische Massnahmen benötigt. Verunreinigungen an den Spiegelflächen führen gegebenenfalls zur Zerstörung der in unmittelbarer Düsennähe ungeschützten Spiegelflächen, da sie dann nicht mehr spiegeln oder jedenfalls zu einer Verfälschung des Messergebnisses, das gemäss diesem Stand der Technik aus einem gleichzeitig zusammengesetzten Messergebnis aller Sensoren besteht.

In der DE-102007013623 A1, die als nächstliegender Stand der Technik angesehen wird, ist ferner eine Einrichtung und ein Verfahren zum Ausrichten eines in Z-Richtung propagierenden Laserstrahls durch eine in X-Y-Ebene definierte Düsenbohrung einer Laserbearbeitungsdüse auf einem Laserbearbeitungskopf beschrieben, umfassend die Schritte:
- Aktivieren des Laserstrahls mit einer definierten Energie;
- Verfahren des Laserstrahls entlang einer ersten Linie in der X-Y-Ebene;
- Messung der Strahlung vor der Düsenbohrung;
- Ermittlung von ersten zwei Randpunkten auf der ersten Linie, die am Rand der Düsenbohrung liegen, durch die Auswertung der gemessenen Strahlung;
- Bestimmung eines ersten Zielpunktes zwischen den beiden ersten Randpunkten auf der ersten Linie und Ausrichtung des Laserstrahls auf diesen ersten Zielpunkt.

Die Einrichtung weist Sensoren zur Erfassung von einem vom Laserstrahl durch die Laserbearbeitungsdüse reflektierten Laserstrahlungsanteil auf.

Bei dieser Zentrierungstechnologie soll also der Laserstrahl in der X-Y-Ebene zuerst entlang einer ersten Linie und danach entlang einer zweiten Linie bewegt werden, was jedoch aufgrund der dort geforderten komplizierten optischen Bedingungen hinsichtlich der verlangten Streuung des Laserstrahls an speziellen optischen Streuflächen aufwendig ist und spezielle Massnahmen benötigt. Im Weiteren erfordert die Einrichtung mindestens 4 Sensoren.

Aufgabe der vorliegenden Erfindung ist es somit, eine verbesserte Laserbearbeitungsmaschine und ein verbessertes Zentrierverfahren zu schaffen, durch welche die oben erwähnten Nachteile des Standes der Technik reduziert bzw. eliminiert werden können. Durch das wiederholbare Zentrieren des Laserbearbeitungsstrahls innerhalb der Düsenbohrung des Laserbearbeitungskopfs soll mit einfacheren Mitteln ohne besondere optische Massnahmen, wie Spiegel oder Aufweitungsoptiken, o.dgl. für den Laserstrahl und automatisierbar durchgeführt werden. Mit verfahrbarem Laserstrahl in axialer Richtung, was i.R. alle Laserschneidmaschinen aufweisen, kann mit dem genannten Düsenzentrieren zusätzlich die Fokuslage relativ zur Düsenspitze und somit zum Werkstück bestimmt werden.

Die gestellte Aufgabe wird durch die Merkmale der unabhängigen Ansprüche 1 und 9 gelöst. Vorteilhafte Weiterbildungen sind in den abhängigen Patentansprüchen dargelegt.

Die erfindungsgemässe Laserbearbeitungsmaschine ging also von dem oben erörterten Stand der Technik, d.h. von einer Laserbearbeitungsmaschine aus, welche mit wenigstens einem Laserbearbeitungskopf ausgestattet ist, welcher einen Innenraum und eine Laserbearbeitungsdüse mit einer Düsenöffnung zum Richten eines Laserarbeitsstrahles auf ein zu bearbeitendes Werkstück aufweist. Die Maschine hat auch eine mit mindestens einem Sensor versehene Ausrichtvorrichtung zum Zentrieren des Laserarbeitsstrahles relativ zur Düsenöffnung.

Das Wesen der erfindungsgemässen Laserbearbeitungsmaschine wird darin gesehen, dass für den Fall mangelnder Zentrierung der Düsenöffnung relativ zum fokussierten primären (Laser)strahl (erster elektromagnetischer Energiestrahl) im Bereich der Düsenöffnung mindestens eine erste Strahlbehandlungseinheit angeordnet ist, welche zur Umwandlung des primären Strahl in einen sekundären elektromagnetischer Strahl, insbesondere breitbandigen Wärmestrahl und zum Emittieren des sekundären Strahl entlang einer Ausbreitungsrichtung in Richtung des Sensors, oder zum Reflektieren/Streuen mindestens ein Teil des primären, fokussierten Strahls entlang der Ausbreitungsrichtung in Richtung des Sensors geeignet ausgebildet ist. Der Sensor zur Detektion des umgewandelten sekundären Strahles ist innerhalb des Laserbearbeitungskopfes angeordnet.

Im Sinne der Erfindung wird also im Wesentlichen Folgendes durchgeführt:
a) Der Primärstrahl wird an der primären Strahlbehandlungseinheit (im Bereich der Düsenöffnung) in Wärmestrahlung (als Sekundärstrahl) umgewandelt und mittels Sensoren im NIR oder Sichtbaren detektiert. Hier ist also die primäre Strahlbehandlungseinheit als Saphirring oder ähnlicher Ring/Anbau ausgebildet, welcher die Primärstrahlung (CO2-Strahlung) absorbiert und als Wärmestrahlung emittiert; oder
b) Der Primärstrahl wird an der primären Strahlbehandlungseinheit (im Bereich der Düsenöffnung) reflektiert/gestreut und wird direkt mit einem Thermopile (Thermosäule), oder anderen Infrarotdetektor, welcher direkte CO2-Strahlung detektieren kann, detektiert; oder
c) Der Primärstrahl wird an der primären Strahlbehandlungseinheit reflektiert/gestreut und wird in einer sekundären Strahlbehandlungseinheit z.B. Glasscheibe vor dem Sensor absorbiert. Diese Glasscheibe emittiert Wärmestrahlung, welche mittels Sensoren im NIR oder Sichtbaren detektiert werden kann.

Es ist zu erwähnen, dass sogar zwei oder drei von den obigen Mechanismen a) - c) gegebenenfalls gleichzeitig in einem Ausführungsbeispiel wirken können (wobei aber ggf. der eine davon um Grössenordnung dominiert).

Der Laserstrahl streift den Düsenrand. Als Düse dient vorzugsweise eine spezielle Kalibrationsdüse. Diese hat in einer bevorzugten Ausführung eine primäre

Strahlbehandlungseinheit, z.B. einen Umwandlungsring aus Saphir, der in der Düse angeordnet ist. Der Umwandlungsring absorbiert das CO2-Licht und reemittiert die Energie als Wärmestrahlung. Diese Emission ist im Wesentlichen isotrop. Die Wärmestrahlung ist breitbandig (planck'sche Strahlung) und daher auch gut im Nahinfrarot (NIR) und gar im Sichtbaren detektierbar, so dass man in der Sensorwahl sehr flexibel ist. Es können also preiswerte und weit verbreitete Detektoren für diese zugänglichen Spektralbereiche verwendet werden, typischerweise In GaAs-Detektoren oder auch Si-Detektoren. Dabei ist der mindestens eine Sensor im Inneren der Düse oder im Inneren des Düsenhalters bzw. des Laserbearbeitungskopfs angeordnet, um die sekundäre (elektromagnetische) Wärmestrahlung zu detektieren.

Je nach zu detektierender Leistung der Strahlquelle bzw. Empfindlichkeit des Detektionssystems empfiehlt sich eine Reflexionsbeschichtung auf der primären Strahlbehandlungseinheit, (z.B. dem Umwandlungsring), welche einen Teil der CO2-Strahlung vor der Umwandlung reflektiert, damit nicht zu viel Energie durch den Umwandlungsring absorbiert wird und diesen zerstört. Als Beschichtung empfiehlt sich beispielsweise eine Goldbeschichtung mit einigen zehn nm Schichtdicke. Der Umwandlungsring als primäre Strahlbehandlungseinheit ist beispielsweise aus Saphir hergestellt. Alternative Materialien zum Saphir sind beispielsweise sämtliche Glasmaterialien, insbesondere Quarzglas (SiO2).

Der mindestens eine, im Innenraum der Laserbearbeitungskopfs vorgesehene Sensor ist vorzugsweise in einem axialen Abstand von der Düse angeordnet und somit besser vom Schneidprozess geschützt ist.

In einer bevorzugten Ausführungsform ist der mindestens eine Sensor zur Detektion des umgewandelten sekundären Wärmestrahls mit Wellenlängenanteilen im Sichtbaren und in Nahinfraroten (NIR) ein NIR-Detektor. Ein konkret eingesetzter NIR-Detektor ist eine In GaAs-Diode, welche Strahlung von ca. 1,0 - 2,6 µm detektieren kann. In mit diesen Dioden durchgeführten Messungen an einem konkret realisierten Aufbau wurden tatsächlich (gemäss dem NIR-Spektrum) Strahlung von ca. 1,0 - 2,2 µm detektiert. Weitere Versuche haben gezeigt, dass die Signale auch im sichtbaren Spektralbereich mit Si-Detektoren gemessen werden konnten.

Idealerweise befindet sich vor jedem Sensor eine (oder mehrere) Glasscheibe, welche einerseits den Sensor vor Verunreinigungen und andererseits vor schädlicher CO2-Laserstrahlung (über 10 µm) schützt.

Die Glasscheibe vor dem Sensor kann erfindungsgemäss als die zweite Strahlbehandlungseinheit funktionieren, welche die CO2-Laserstrahlung in Wärmestrahlung umwandelt. Die Glasscheibe als die sekundäre Strahlbehandlungseinheit wirkt somit - analog der primären Strahlbehandlungseinheit - als eine Vorrichtung, die die CO2-Laserstrahlung in eine Wärmestrahlung umwandelt, um dadurch eine optimale Detektion auf dem Sensor zuzulassen und dessen Eigenschaften für den Zentrierzweck optimal zu nutzen.

Die erste Strahlbehandlungseinheit ist bei einer anderen bevorzugten Ausführung geeignet, mindestens einen Teil des fokussierten primären Laserstrahls in sekundäre elektromagnetische Strahlung, namentlich in eine Streu-/Reflexionsstrahlung umzulenken, welche gegebenenfalls mindestens von einem Sensor detektiert wird. Der Streu/Reflexions-Kegel des zurückgeworfenen CO2-Lichts zurück in den Bearbeitungskopf ist jedoch sehr gross. Eine schräge Fläche einer trichterförmigen Umwandlungseinheit an der Düsenkante ist daher vorteilhaft. Hingegen ist der Winkel der Schräglage der Umlenkkante relativ tolerant nach unseren Versuchen, da der Streukegel eben gross ist.

Das wiederholbare und recht präzise und kurzzeitige Zentrieren kann also mithilfe der vorliegenden Erfindung mit relativ einfachen Mitteln automatisiert werden. Dies ist eine Grundvoraussetzung für qualitativ hochwertiges Laserschneiden, bei dem keine richtungsabhängigen Schneidergebnisse auftreten dürfen.

Die erfinderische Idee besteht einerseits darin, dass anstatt von äusseren Temperatursensoren und des Auftreffens des Laserstrahls auf dem Werkstück ein Auftreffen des fokussierten primären Laserarbeitsstrahles auf der inneren Strahlbehandlungseinheit in der Nähe der Düsenöffnung oder vor den Sensoren einen sekundären Strahl, insbesondere Wärmestrahl mit Wellenlängenanteilen im Sichtbaren und Nahinfraroten erzeugt, wenn sich das System Laserarbeitsstrahl/Düsenöffnung in einem unzentrierten Zustand befindet, und der so erzeugte innere sekundäre elektromagnetische Wärmestrahl durch mindestens einen innenliegenden Sensor zuverlässig detektiert wird. Es wird somit der fokussierte primäre elektromagnetische Strahl, insbesondere der CO2-Laserarbeitsstrahl zu einem, für In GaAs-Dioden detektierbaren sekundären Wärmestrahl umgewandelt. Anstelle von In GaAs-Dioden können auch, wenngleich mit verminderter Signalstärke, Detektoren im Sichtbaren, z.B. Si-Dioden verwendet werden.

Alternativ, wird erfindungsgemäss der Primärstrahl an der ersten Strahlbehandlungseinheit (im Bereich der Düsenöffnung) zurück reflektiert/gestreut und wird direkt mit einem Thermopile

(Thermosäule), oder anderen Infrarotdetektor, welcher direkte CO2-Strahlung detektieren kann, detektiert.

Aus den digitalen Sensormesswerten ist es für ein an sich bekanntes CNC-System der Maschine (Hauptachsen) möglich, die Mitte der Düsenbohrung in an sich bekannter Weise zu errechnen. Es ist allerdings nötig, das Auftreten der Strahlung mit der exakten Achsposition (X-Y Koordinaten) zu verknüpfen. Danach ist die Maschine bereits in der Lage, die Düse im Sinne des Zentrierens relativ zum Laserstrahl oder umgekehrt mittels der Ausrichtvorrichtung schnell und exakt zu verschieben. Allenfalls kann auch nur - wie an sich bekannt - nach erfindungsgemässen Detektion der Wärmestrahlung aus der Strahlbehandlungseinheit die Linse im Laserstrahl verschoben werden, um den Laserstrahl relativ zur Düsenöffnung auszurichten.

Die nötigen Massnahmen zur erfindungsgemässen automatischen Düsenzentrierung sind, wie folgt:
- Die an der ersten und/oder zweiten Strahlbehandlungseinheit entstehende sekundäre Strahlung (z.B. Wärmestrahlung) wird durch mindestens einen innenliegenden Sensor erfasst. Dies wird mit einer speziellen und neuartigen Düsenausbildung mit wenigstens einer Strahlbehandlungseinheit erreicht. Entscheidend ist im Falle einer sekundären Strahlung in Form einer Wärmestrahlung, dass dabei nicht die CO2-Laserstrahlung selbst, sondern eine sekundäre Wärmestrahlung detektiert wird. Diese Wärmestrahlung kann auch bei kleineren Wellenlängen mit an sich bekannten hochauflösenden und verzögerungsfrei detektierenden Sensoren, wie In GaAs-Sensoren oder Si-Dioden, bestens und günstig detektiert werden;
- Der mindestens eine innere Strahlungssensor ist vorteilhaft im Innenraum des Bearbeitungskopfes derart angeordnet, dass dieser die auftretenden sekundären Strahlung erfassen kann;
- Die Laserleistung während des Anfahrens an die Zentrierdüse kann mit hoher Leistung erfolgen (d.h. Betriebsleistung; Kilowatt-Bereich), um möglichst dem normalen Schneidzustand zu entsprechen;
- Um durch die hohe Laserleistung die Düse nicht zu beschädigen, muss das System gemäss einer besonderen Ausgestaltung so ausgerüstet sein, dass es in der Lage ist, die sekundäre Strahlung so schnell wie möglich zu erfassen, und danach den primären Laserarbeitsstrahl sofort abzustellen oder bei Detektion den Strahl sofort wieder ins Zentrum der Düse zu fahren;

- Die CNC Steuerung der Maschine ist in der Lage, das Auftreten der sekundäre Strahlung mit der exakten Achsposition (X-Y-Koordinaten) zu verknüpfen; dies erfordert ein hinreichend schnelles Erfassen und Verarbeiten des Signals;
- Die gewählte Kombination aus Strahlwellenlängenumwandlung und NIR-Detektion mittels mindestens eines Sensors hat sich in Prototypen bestens bewährt. Das Anfahren des Laserarbeitsstrahls an die innere Umwandlungskante erfolgt vorzugsweise nacheinander in vier Achsrichtungen (X+; X-; Y+; Y-).

Das erfindungsgemässe Verfahren kann wie folgt durchgeführt werden:
Der Startpunkt beginnt immer beim letzten, gespeicherten Zentrum. Von diesem Punkt wird durch verstellen der Düse oder durch Verstellen der Düsenhalterung relativ zur Düse durch den Arbeitslaserstrahl eine Düsenkante angefahren. Sobald von dem mindestens einen Sensor ein Sekundärstrahl erkannt wird, speichert die Steuerung die Koordinaten. Dies wird in alle 4 oder 3 Achsrichtungen wiederholt. Daraus errechnet die Steuerung ein neues Zentrum. Zur Erhöhung der Genauigkeit wird obiges Vorgehen vorzugsweise nochmals durchlaufen. Voneinander abweichende Zentren nach mehreren Zentrier-Durchläufen können auch rechnerisch zu einem tatsächlichen Zentrum interpoliert werden. Erst das neue Zentrum wird nun endgültig zur Laserbearbeitung verwendet.

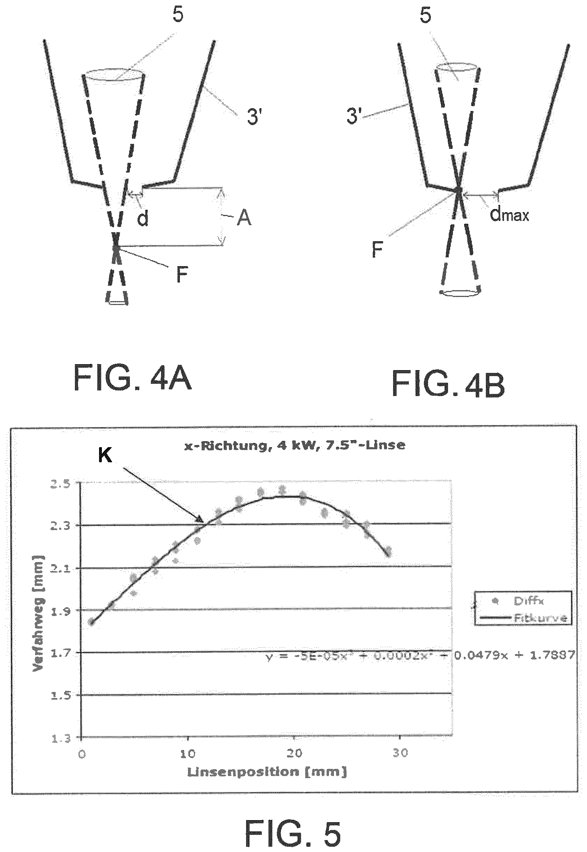

Nach einem weiteren Merkmal der Erfindung wird zur oben beschriebenen lateralen Justage des Fokus des primären elektromagnetischen Strahls, insbesondere CO2-Laserarbeitsstrahl in Bezug zur Düsenspitze bzw. Düsenöffnung, der primären Strahl auch in axiale Richtungen justiert. Vorzugsweise wird bei der Justierung die bevorzugte axiale Position des Fokus des primären elektromagnetischen Strahls in den für das zu bearbeitende Werkstück ideale Position gebracht. Die axiale Justage des Fokus des Primärstrahls erfolgt typischerweise wie folgt:
Es wird an einer axialen Position der Fokussierlinse zentriert, z.B. z=0. Aus dieser Zentrierung geht der Verfahrweg d (siehe unten Fig. 4A und 4B) hervor. Nun fährt man die Fokussierlinse zur Position z=2 und wiederholt die Zentrierung. Auch daraus geht ein d hervor. Ebenso verfährt man mit den Positionen z=4 etc. bis z.B. z=30. Aus jeder Zentrierung ergibt sich ein d und somit die Kurve (Fig. 5). Offensichtlich ist der Verfahrweg d maximal, wenn der Fokus bei der Düsenspitze liegt. Somit gibt der Scheitelpunkt der Kurve die Fokusposition an der Düsenspitze wieder. Ist bekannt, bei welcher Linsenstellung die Fokuslage bei der Düsenspitze liegt, so kann die Fokuslage bei beliebiger Linsenstellung leicht abgeleitet werden.

Anstelle des hier beschriebenen axialen Fahrens mittels Fokussierlinse kann der Laserstrahl auch mittels anderen optischen Elementen, insb. adaptiven Spiegel geschoben werden. Diese Fokuslagendetektion und Justage relativ zur Düsenspitze ist durchführbar von wenigen 100 W bis mehrere kW (bis 6kW getestet) mit sub-mm Auflösung.

Weitere Vorteile, Merkmale und Einzelheiten der Erfindung ergeben sich aus der nachfolgenden Beschreibung, in der unter Bezugnahme auf die Zeichnungen Ausführungsbeispiele beschrieben sind.

Auch die Bezugszeichenliste ist Bestandteil der Offenbarung.

Die Figuren werden zusammenhängend und übergreifend beschrieben. Gleiche Bezugszeichen bedeuten gleiche Bauteile, Bezugszeichen mit unterschiedlichen Indices geben funktionsgleiche oder -ähnliche Bauteile an. Es zeigen dabei:
- Fig. 1 den Querschnitt eines ersten Ausführungsbeispiels des erfindungsgemässen Laserbearbeitungskopfes der Laserbearbeitungsmaschine;
- Fig. 2 eine schematische Darstellung eines zweiten Ausführungsbeispiels des Laserbearbeitungskopfes;
- Fig. 3 eine schematische Darstellung eines dritten Ausführungsbeispiels des Laserbearbeitungskopfes;
- Fig. 3A eine schematische Darstellung einer Variante der Anordnung nach Fig. 3, wobei aber eine externe Zentriereinheit mit Strahlbehandlungseinheit vorgesehen ist;
- Figuren 4A und 4B schematische Darstellungen vom Verfahrweg (d) zur Düsenzentrierung bei unterschiedlichen axialen Fokuslagen;
- Fig. 5 einen Diagramm bei Bestimmung des Verfahrweg (d) in Abhängigkeit der Fokusierlinsenposition;
- Fig. 6 einen Querschnitt der Zentrierdüse mit eingebautem Umwandlungsring;
- Fig. 7 eine schematische Darstellung eines vierten Ausführungsbeispiels des Laserbearbeitungskopfes, wobei die Detektion oberhalb der Fokussierlinse passiert.

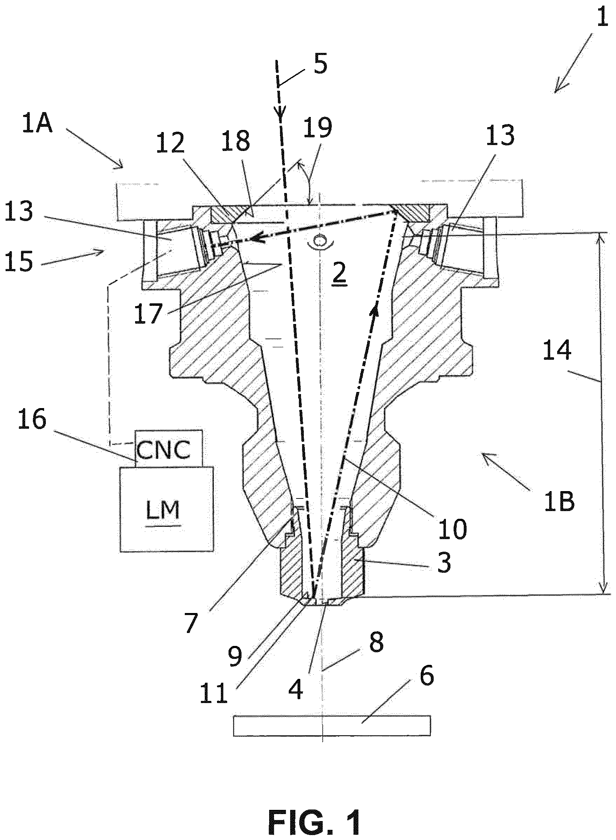

In Fig. 1 ist der Aufbau eines Laserbearbeitungskopfes 1 ersichtlich, welcher zu der erfindungsgemässen (schematisch dargestellten) Laserbearbeitungsmaschine LM gehört. Der Laserbearbeitungskopf 1 ist in zwei Teile geteilt, d.h. er besteht aus einem oberen Kopfteil 1A und einem unteren Kopfteil 1 B, welche zueinander in Richtungen einer zur Düsenachse 8 normalen X-Y-Koordinatenebene verschiebbar angeordnet sind.

Der untere Kopfteil 1 B hat einen sich nach oben erweiternden Innenraum 2, welcher von unten durch eine Düse 3, z.B. selbst eine Laserbearbeitungsdüse, oder bevorzugt eine spezielle Zentrierdüse bzw. Kalibrationsdüse begrenzt ist. Die Düse 3 ist mit einer axialen Düsenöffnung 4 zum Richten eines (in an sich bekannter Weise erzeugten) des primären fokussierten Strahles 5, insbesondere Laserarbeitsstrahls auf ein zu bearbeitendes Werkstück 6 ausgebildet. Die Düse 3 ist hier mit dem Kopfteil 1 B z.B. durch einen Schnellverschluss 7 lösbar verbunden, wobei ihre Düsenöffnung 4 koaxial zum rotationssymmetrischen Innenraum 2 des unteren Kopfteils 1 B angeordnet ist. In Fig.1 ist der primäre fokussierte elektromagnetische Strahl 5, insbesondere Laserarbeitsstrahl schematisch durch eine strichlierte Linie dargestellt.

Es ist zu betonen, dass unter dem Begriff "fokussierter Strahl" stets ein Strahl, z.B. Laserstrahl nach fokussierendem Element (z.B. Fokussierlinse) zu verstehen ist.

Im Bereich der Düsenöffnung 4 ist mindestens eine innere erste Strahlbehandlungseinheit 9, z.B. in Form einer Düsenkante oder eines Einsatzelementes vorgesehen, welche bei mangelnder Zentrierung der Düsenöffnung 4 relativ zum primären fokussierten Strahl 5 geeignet ist:
a) Zur Umwandlung des primären, fokussierten Strahl 5 in einen sekundären elektromagnetischer Strahl 10, insbesondere Wärmestrahl; Der Primärstrahl 5 wird also durch die erste Strahlbehandlungseinheit 9 in Wärmestrahlung umgewandelt, d.h. die CO2-Strahlung wird absorbiert und als Wärmestrahlung emittiert entlang einer Ausbreitungsrichtung 10A in Richtung des Sensors 13; und/oder
b) Zur Umlenkung des primären, fokussierten Strahl 5 durch Reflektieren/Streuen entlang der Ausbreitungsrichtung 10A in Richtung des Sensors 13.

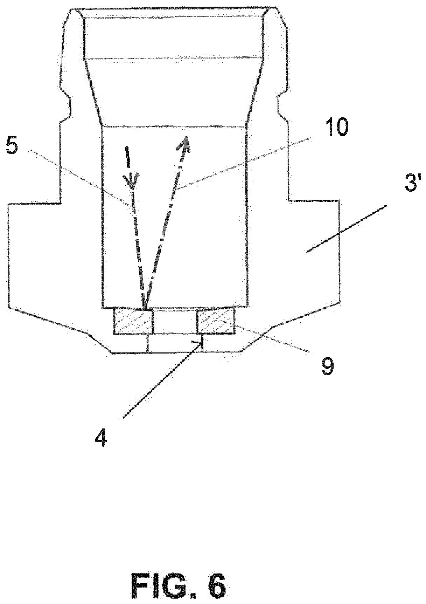

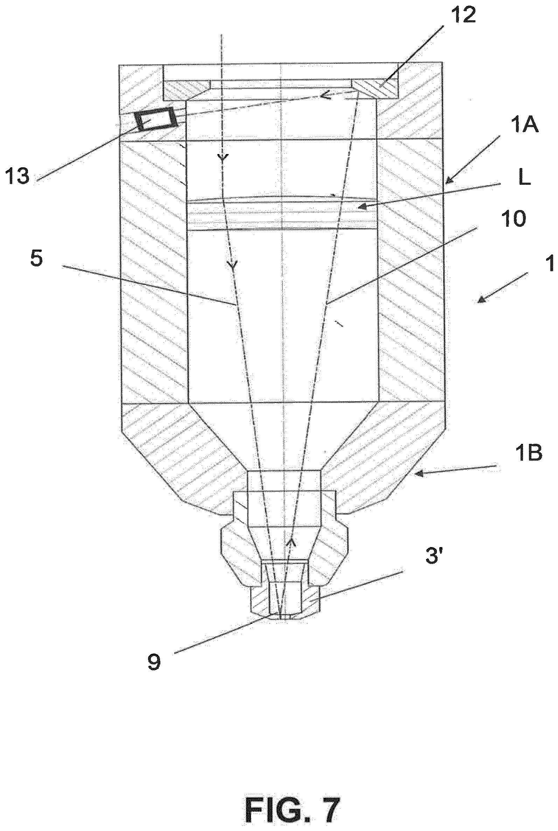

Die erste Strahlbehandlungseinheit 9, typischerweise ein absorbierende Einsatzelement ist so eingebaut (siehe auch Fig. 6), dass davon emittierte Wärmestrahlung 10, welche im Wesentlichen isotrop abstrahlt, u.a. entlang des in Fig. 1 strichpunktierten Strahlrichtung 10A auf einen Reflektor 12 gelenkt und nach Umlenkung an diesem Reflektor 12 von mindestens einem Sensor 13 erfasst wird (Fig. 1 und 7).

Es ist aber zu betonen, dass die erste Strahlbehandlungseinheit 9 mit (oder ohne) Düsenöffnung 4 als separates Element ausgebildet sein könnte, welches z.B. an einer inneren Mantelfläche der Laserbearbeitungsdüse 3 in seiner vorbestimmten axialen Lage fixierbar ist (nicht gezeigt). Es ist auch eine Ausführung möglich, bei welcher die erste Strahlbehandlungseinheit 9 aus mehreren Umwandlungsteilen, z.B. aus radialen Segmenten ausgebildet ist (nicht dargestellt).

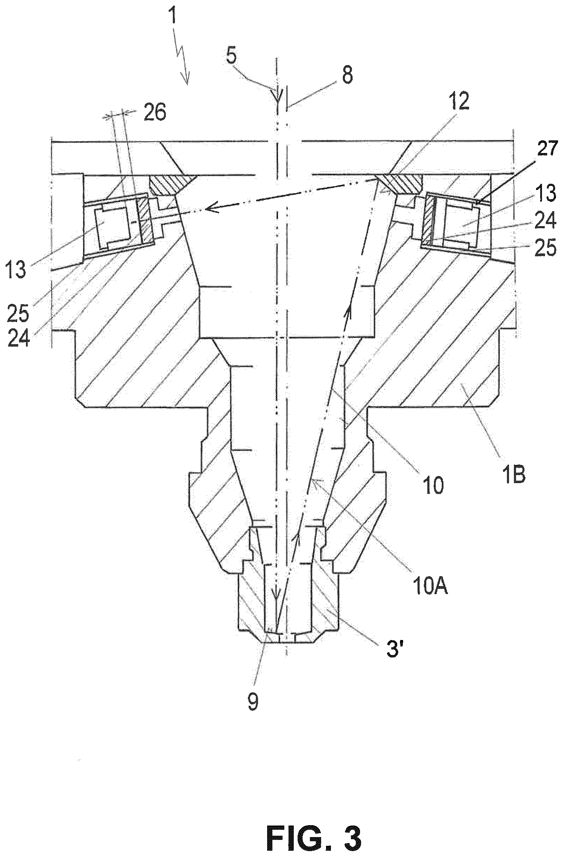

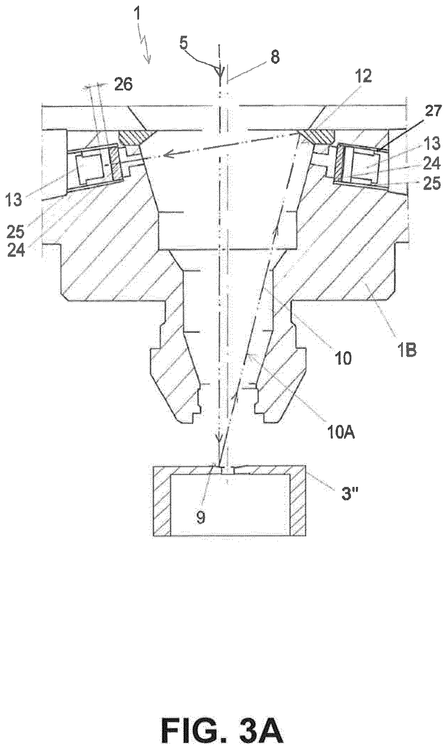

In Fig. 3 ist eine solche Ausführung illustriert, wobei die erste Umwandlungseinheit 9 an einer inneren Mantelfläche eines separaten zusätzlichen Zentrierelementes, insbesondere Zentrierdüse 3' ausgebildet ist, durch welches die Laserbearbeitungsdüse während des Zentrierungsprozesses, z.B. vor dem normalen Maschinenbetrieb, ersetzt wird. Die Zentrierdüse 3' ist also nach Abmontieren der Laserbearbeitungsdüse am unteren Ende des Laserbearbeitungskopfes 1 koaxial angeordnet und lösbar fixiert. Durch die Anwendung der zusätzlichen Zentrierdüse 3' kann die Laserbearbeitungsdüse sogar von den geringen Belastungen des Zentrierprozesses vollständig verschont werden.

Die Sensoren 13, welche den sekundären Strahl 10, z.B. Wärmestrahl am Ende seiner Strahllaufes entlang der strichpunktierten Strahlrichtung 10A detektieren, sind erfindungsgemäss vorzugsweise in einem axialen Abstand 14 von der Umwandlungseinheit 9 und in der Wand des Innenraumes 2 des Kopfes 1 versenkt angeordnet (Fig. 1).

Die Sensoren 13 gehören zu einer Ausrichtvorrichtung 15 der Maschine LM, welche geeignet ist, den unteren Kopfteil 1 B zusammen mit der Düsenöffnung 4 relativ zum primären Strahl 5 zu verschieben, d.h. zu zentrieren. Dazu ist die Ausrichtvorrichtung 15 mit bekannten Antrieben (nicht dargestellte Hauptachsen der Maschine) ausgerüstet, welche die nötigen Verstellungen mindestens in X-Y-Achsrichtungen ermöglichen. Die Sensoren 13 der Ausrichtvorrichtung 15 liefern Messsignale an ein, an sich bekanntes CNC-System 16 der Laserbearbeitungsmaschine LM (Fig.1).

Im Sinne der Erfindung ist aber die erste Strahlbehandlungseinheit 9 nicht unbedingt in der Laserbearbeitungsdüse 3 selbst vorgesehen, sondern könnte auch ausserhalb des Kopfes 1 als Zentrierelement 3" vorhanden sein. Diese letztere Anordnung ist in Fig. 3A illustriert, wobei das externe Zentrierelement 3" (nicht zum Schneidkopf 1 gehörend) sondern unter dem Kopf 1 und damit koaxial angeordnet ist, und die Umwandlungseinheit 9 am externen Zentrierelement 3" angebracht ist.

Beim Zentrieren wird das relative Anfahren des primären fokussierten Strahls 5, insbesondere Laserarbeitsstrahls an die Düse 3 vorzugsweise in vier Achsrichtungen X+ und X-, sowie Y+ und Y- durchgeführt. Der primäre Strahl 5 wird also relativ zur Düse 3 in allen vier Richtungen +/-X und +/-Y verschoben, bis der primäre Strahl 5 jeweils an der Kante der primären Strahlbehandlungseinheit 9 als der sekundäre Strahl, d.h. Wärmestrahl 10 entlang des oben beschriebenen Wärmestrahlenganges 10A geleitet wird. An dessen Ende wird der sekundäre Strahl 10 von den optischen Sensoren 13 detektiert, und deren Messwerte werden gespeichert. Diese gespeicherten Messwerte müssen allerdings mit der exakten Achsposition (Koordinaten X-Y) verknüpft werden. Dies bedeutet, dass die Sensoren 13 jeweils nur eine Information für die Steuerung erzeugen. Diese speichert aber auch die Koordinaten. Dadurch ist es für das CNC-System 16 möglich, zu einem unzentrierten Zustand die Mitte der Düsenöffnung 4 als zentrierte Soll-Lage zu errechnen.

Danach kann die eigentliche automatische Düsenzentrierung mittels Verschiebung des Kopfteils 1 B gegenüber dem Kopfteil 1A in Richtungen der X-Y Achsen durch Betätigung der Ausrichtvorrichtung 15 durchgeführt werden. Wird der obige vollautomatische Düsenzentrierungsprozess in Verfolgung aller vorzeichenbehafteten Richtungen der X-Y-Ebene mehrfach ausgeführt, so wird das Zentrum der Düsenöffnung 4 durch die Laserbearbeitungsmaschine LM schnell, systematisch und genau in den primären Strahl 5, insbesondere Laserarbeitsstrahl verschoben.

Für diese Ausführung der Erfindung ist es vorgesehen, dass der Laserbearbeitungskopf 1 mithilfe der Antriebe der Ausrichtvorrichtung 15 in der X-Y-Ebene verstellbar ist. Die Ausmessung der zentrierten Position der Düse 4 kann zum Beispiel folgendermassen ausgeführt werden:
- Start bei Xmin und kommt eine Verschiebung bis Xmax. Dazwischen gibt es ein Wärmestrahlenmaximum und ein Wärmestrahlenminimum. Das Wärmestrahlenminimum gibt die ideale Zentrierung in X-Richtung an, das merkt sich der Rechner;
- Danach kommen ein Start bei Ymin und eine Verschiebung bis Ymax. Dazwischen gibt es auch ein Wärmestrahlenmaximum und ein Wärmestrahlenminimum. Das Wärmestrahlenminimum gibt die ideale Zentrierung in Y-Richtung an, das merkt sich der Rechner; Ein Rechner (des CNC-Systems) bringt nun die X- und Y-Achsen genau in die Wärmestrahlenminimumpositionen von X und Y, womit die Idealzentrierung erreicht ist.

Wichtig dabei ist, dass das erfindungsgemässe Zentriersystem nicht auf Reflexion und Absorption des Laserarbeitsstrahles und auf Temperaturmessungen am Werkstück unterhalb der Düse basiert. Erfindungsgemäss ist vielmehr mindestens ein Sensor 13, vorteilhaft mindestens ein optischer Sensor zur Detektion der Wärmestrahlung, vorgesehen, welcher innen im Laserbearbeitungskopf 1 unterhalb oder auch oberhalb der Fokussieroptik (siehe auch Fig. 7), jedenfalls aber deutlich oberhalb der Düse 3 angeordnet ist. Der mindestens eine Sensor 13 ist somit in Fig. 7 nicht im unteren Kopfteil angeordnet. Damit können die mithilfe des primären Strahls 5 durch den sekundären Wärmestrahl 10 an die Sensoren 13 übermittelten Signale sehr schnell, präzis und reproduzierbar erfasst werden.

In der Ausführung nach Fig.1 sind vier optische Sensoren 13 vorgesehen, welche im Innenraum 2 entlang des Umfanges einer inneren Mantelfläche 17 des Laserbearbeitungskopfes 1 gleichmässig verteilt (ggf. in Ringform) in einer zur X-Y-Ebene parallelen Ebene angeordnet sind (davon sind nur zwei in Fig.1 illustriert). Es können weniger oder mehr als die hier beschriebenen vier Sensoren 13 vorgesehen sein. Versuche haben gezeigt, dass die Zentrierung selbst mit nur einem Detektor funktioniert.

Wie oben schon erwähnt, ist in Fig.1 der Reflektor 12 zum Umlenken/Umrichten des, an der primären Strahlbehandlungseinheit 9 entstehenden sekundären Strahles 10 in Richtung der Sensoren 13 entlang der V-förmigen Strahlausbreitungsrichtung 10A angeordnet. Der Reflektor 12 weist im ersten Ausführungsbeispiel eine konische Reflexionsfläche 18 auf. Diese schliesst in radialer Richtung einen Winkel 19 mit der Horizontalen ein, dessen Wert vorzugsweise etwa 45° beträgt. Der ringförmige Reflektor 12 ist nach Fig.1 im oberen Bereich des unteren Kopfteiles 1 B als Ringelement koaxial und lösbar fixiert. Gegebenenfalls könnte der Reflektor 12 aus mehreren Teilen, z.B. Segmenten ausgebildet sein (nicht dargestellt). In einem typischen Ausführungsbeispiel ist er einfach an der Innenwand der Düse ausgebildet. Hingegen in Ausführung gemäss Fig. 7 ist der Reflektor 12 im oberen Kopfteil angebracht.

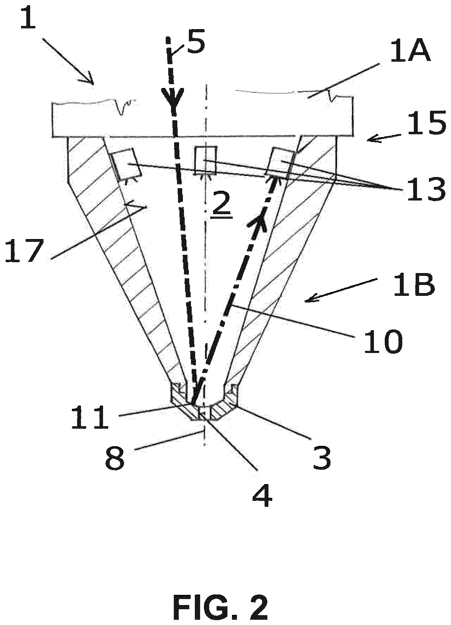

In Fig. 2 ist das zweite, konstruktiv einfachere Ausführungsbeispiel des erfindungsgemässen Laserbearbeitungskopfs 1 schematisch dargestellt. Ein wesentlicher Unterschied zur ersten Ausführung gem. Fig.1 liegt darin, dass die Ausbreitungsrichtung 10A des sekundären Wärmestrahles 10 hier nicht über einen Reflektor, sondern direkt zu einem der optischen Sensoren 13 führt. Die Sensoren 13 sind im Innenraum 2 entlang des Umfanges einer inneren Mantelfläche 17 des Laserbearbeitungskopfes 1 z.B. in einer zur X-Y-Ebene parallelen Ebene gleichmässig verteilt, und so nach unten orientiert, dass sie den an der ersten Strahlbehandlungseinheit 9 entstehenden sekundären Strahl 10 via ihrer Ausbreitungsrichtung 10A direkt detektieren können. Damit erfolgt die Messwerterfassung noch schneller, präziser und reproduzierbarer. Ein Auftreffpunkt des primären Strahls 5 ist mit 11 bezeichnet.

In Fig. 3 ist das dritte Ausführungsbeispiel des erfindungsgemässen Laserbearbeitungskopfs 1 illustriert, wobei vier Sensoren 13 in radialer Richtung im Innenraum um etwa 85° zur Düsenachse 8 orientiert sind. Eine erste Strahlbehandlungseinheit 9, z.B. eine Umlenkkante einer Zentrierdüse 3' ist so geneigt, dass der, an ihr umgewandelt oder reflektierte sekundärer Umwandlungsstrahl 10 entlang einer V-förmigen Ausbreitungsrichtung 10A auf einen Reflektor 12 gelenkt und nach Reflexion an diesem Reflektor 12 von einem Sensor 13 erfasst wird.

Die Sensoren 13 sind hier "In GaAs"-Sensoren, welchen bevorzugt mindestens je eine zweite Strahlbehandlungseinheit 24, z.B. eine Glasvorlage, insbesondere Glasscheibe zugeordnet ist, welche an einer Stirnseite mit einer HR-Beschichtung ("high reflectivity" = hohe Reflexionsfähigkeit für langwellige Strahlung - insbesondere CO2-Laserstrahlung) versehen ist (die Beschichtung selbst ist nicht dargestellt). Die beschichteten Glasscheiben 24 sind in diesem Falle vorteilhaft aus handelsüblichem SiO2-Glas gefertigt.

Jede Glasscheibe 24 ist beim Ausführungsbeispiel nach Fig. 3 vor dem zugehörigen "In GaAs"-Sensor 13 zweckmässig mit einem Abstand 26 und vorzugsweise in einer gemeinsamen Halterung 25 angeordnet. Jede ausmontierbare Halterung 25 - zusammen mit dem eingebauten "In GaAs"-Sensor 13 und Glasscheibe 24 - ist in einer Aussparung 27 des unteren Kopfteiles 1 B fixiert.

Bei automatischer Düsenzentrierung mit dem Ausführungsbeispiel nach Fig. 3 wird also die Zentrierdüse 3' relativ zum fokussierten primären Strahles, insbesondere Laserarbeitsstrahles 5 entlang einer X oder Y Achsenrichtung verschoben, bis einer der "In GaAs"-Sensoren 13 einen bestimmten Pegel erreicht hat. Die vier "In GaAs"-Sensoren 13 werden also ausschliesslich durch die +/-X und +/-Y Verschiebungen des Schneidkopfs von der elektromagnetischen Strahlung "beleuchtet", d.h. der Laserstrahl wird in +X Achsrichtung verschoben, die Laserstrahlung wird vom Düsenrand als die erste Strahlbehandlungseinheit 9 reflektiert und trifft die über einen Spiegel im Schneidkopf, durch einen Filter durch die Glasscheibe 24 als zweite Strahlbehandlungseinheit, welche die Laserstrahlung absorbiert und die Energie als Wärmestrahlung reemittiert , welche zuletzt von den "In GaAs" Diode(n) detektiert werden.

Sobald die Summe der Intensitäten aller vier "In GaAs" Dioden 13 einen gewissen Wert übersteigt, schaltet der primäre Laserstrahl 5 sofort aus. Wenn dies in alle vier X und Y Achsenrichtungen gemacht wird, kann daraus die gegenseitige Position des primären Laserarbeitsstrahles 5 und der Laserbearbeitungsdüse 3 oder der Zentrierdüse 3' ermittelt, und damit die Laserbearbeitungsdüse 3 oder die Zentrierdüse 3' schnell, zuverlässig und wiederholbar zentriert werden.

In Figuren 4A und 4B wird ein Verfahrweg d zur Düsenzentrierung bzw. Fokuslagenjustage bei unterschiedlichen axialen Fokuslagen schematisch dargestellt. In Fig. 4A befindet sich ein Fokus F des Laserstrahles 5 mit einem Abstand A unterhalb der Düsenöffnung 4. In Fig. 4B befindet sich aber ein Fokus F des Laserstrahles 5 im Bereich der Düsenspitze. Durch Verfahren der Düse 3' relativ zum Laserstrahl 5 in lateraler Richtung wird die Düse 3 relativ zum Laserstrahl 5 zentriert (oder umgekehrt, d.h. Verfahren des Laserstrahls 5 relativ zur Düse 3). Dabei wird die Düse 3' bis zum Berühren des Laserstrahls 5 in einer Richtung verschoben.

Der Laserstrahl 5 wird mittels der ersten Strahlbehandlungseinheit, hier am Düsenrand in eine detektierbare sekundäre Strahlung gewandelt oder reflektiert. Diese sekundäre Strahlung wird dann durch mindestens einen Sensor (hier nicht gezeigt) detektiert. Danach fährt die Düse 3' in die entgegengesetzte Richtung wiederum bis der Laserstrahl 5 den Düsenrand berührt. In der Mitte der beiden Berührungspunkte wird die Düse 3' in der gefahrenen lateralen Richtung ideal zum Laserstrahl 5 justiert. Um die Düse 3 in die um 90° gedrehte laterale Richtung zu justieren, wird der obige Ablauf entsprechend in dieser Richtung angewendet.

Figuren 4A und 4B zeigen also, dass der laterale Verfahrweg d des Laserstrahls 5 relativ zur Düse 3 von der axialen Fokuslage abhängig ist. Dabei ist der Fahrweg d mit Fokus F ausserhalb der Düsenspitze (Fig. 4A) deutlich kleiner, als wenn der Fokus F im Bereich der Düsenspitze liegt (Fig. 4B). Dieser Umstand kann erfindungsgemäss zur Detektion der Fokuslage in axialer Richtung ausgenutzt werden.

Bei unterschiedlicher Fokusposition in axialer Richtung (typischerweise veränderbar mittels Fahren der Fokussierlinse L) wird eine Düsenzentrierung durchgeführt. Daraus ergibt sich eine Kurve K (siehe Fig. 5). Dabei zeigt sich, dass der Verfahrweg d maximal ist, wenn der Fokus F bei der Düsenspitze liegt (Fig. 4B). Somit gibt ein Scheitelpunkt der Kurve K die Fokusposition an der Düsenspitze wieder. Diese Fokuslagendetektion relativ zur Düsenspitze ist durchführbar von wenigen 100 W bis mehrere kW Leistung. Ist die Einstellung, bei welcher die Fokuslage bei der Düsenspitze liegt, bekannt, so kann jede beliebige gewünschte Einstellung angefahren und eingestellt werden. Anstelle axialen Fahrens mittels Fokussierlinse L kann der Laserstrahl 5 auch mittels anderer optischen Elemente, insb. adaptiver Spiegel, geschoben werden.

In Fig. 6 ist ein bevorzugte Ausführungsform der Zentrierdüse 3' (Kalibrationsdüse) mit eingebautem Umwandlungsring als erfindungsgemässe erste Strahlbehandlungseinheit 9 dargestellt. Die Umwandlung der primären CO2-Strahlung 5 in sekundäre Wärmestrahlung 10 ergibt sich wie folgt:
Der primäre Laserstrahl 5 streift den Düsenrand (Fig. 6). Die Düse 3', als spezielle Kalibrationsdüse, hat an der Kante der Düsenöffnung 4 den Saphirring, welcher eigentlich als die primäre Strahlbehandlungseinheit 9 dient, und welcher das CO2-Strahl 5 absorbiert und die absorbierte Energie als eine sekundäre Wärmestrahlung 10 reemittiert. Diese Emission ist im Wesentlichen isotrop. Diese sekundäre Wärmestrahlung 10 ist breitbandig (planck'sche Strahlung) und daher auch gut im Nahinfrarot (NIR) und gar im Sichtbaren detektierbar.

Es können also preiswerte und weit verbreitete Detektoren/Sensoren 13 für diese zugänglichen Spektralbereiche verwendet werden, insbesondere In GaAs-Detektoren oder auch Si-Detektoren. Die NIR-Detektoren und Si-Detektoren sind bereits im Schneidkopf integriert, sodass sie vorteilhaft auch zur Prozessbeobachtung verwendet werden können. Je nach der zu detektierenden Leistung der Strahlquelle 5 bzw. Empfindlichkeit des Detektionssystems empfiehlt sich eine Reflexionsbeschichtung auf den Saphirringen, welche einen Teil der CO2-Strahlung 5 vor der Umwandlung reflektieren, damit nicht zu viel Energie durch die Saphirringe absorbiert wird und diese zerstört. Als Beschichtung empfiehlt sich beispielsweise eine Goldbeschichtung mit einigen zehn nm Schichtdicke.

Alternative Materialien zum hier verwendeten Saphir als die erste Strahlbehandlungseinheit 9 gibt es viele, so sind beispielsweise sämtliche Glasmaterialien wie Quarzglas (SiO2), Kronglas, Flintglas u.v.m. ebenfalls gut geeignet. Dabei wird ausgenutzt, dass CO2-Strahlung absorbiert, jedoch kurzwelligere Strahlung (sichtbar /NIR) durchgelassen wird. Anstelle der beschriebenen Materialien kann auch anderes Material verwendet werden, welches dadurch ausgezeichnet ist, dass CO2-Strahlung absorbiert und kurzwelliges Licht (NIR - sichtbar) transmittiert. Die erste Strahlbehandlungseinheit 9 ist in Fig. 6 koaxial zu der Düsenöffnung 4 angeordnet sowie vorzugsweise mit einer Reflexionsbeschichtung (nicht gezeigt) versehen.

Ein weiteres Ausführungsbeispiel des erfindungsgemässen Laserbearbeitungskopfes 1 ist in Fig. 7 dargestellt. Beim Berühren des primären Laserstrahls 5 der ersten Strahlbehandlungseinheit 9, d.h. die Düsenkante, wird die Strahlung 5 reflektiert und gestreut. Diese reflektierte und/oder gestreute sekundäre Strahlung 10 propagiert in einem grösseren Raumwinkel zurück in den Schneidkopf 1. Ist ein Detektor 13 genügend weit vom Reflexions- bzw. Streuzentrum (d.h. von der erste Strahlbehandlungseinheit 9) entfernt angeordnet, so wird der Detektor 13 bei jeder Berührung, unabhängig der lateralen Verfahrrichtung, diese Strahlung 10 empfangen. Der einzige Detektor 13 ist hier eine Thermosäule ("Thermopile") (d.h. ein Messgerät für elektromagnetische Strahlung) oder ein Infrarotdetektor. Der Primärstrahl 5 wird bei der Ausführung nach Fig. 7 an der ersten Strahlbehandlungseinheit 9 reflektiert/gestreut und wird direkt mit dem Thermopile oder einem Infrarotdetektor 13, welcher direkte CO2-Strahlung detektieren kann, detektiert.

Fig. 7 zeigt auch den bevorzugten Einbauort für den einzigen Detektor 13 im Schneidkopf 1, welcher hier im oberen Kopfteil 1A, oberhalb einer Fokussierlinse L angeordnet ist. Dieser Einbauort (mit dazu gezeichnetem Reflex/Streustrahl 10), ist nach unseren Versuchen am besten zu Justage der Fokusposition geeignet, wobei sogar eine reduzierte Anzahl von Detektoren 13, bzw. nur 1 Stück unbedingt notwendig ist.

Bei der Justierung kann die bevorzugte axiale Position des Fokus F des primären elektromagnetischen Strahls 5 mittels Düsenzentrierung gemessen und anwendungsspezifisch eingestellt werden.

Wesentlichere Unterschiede der Erfindung bezüglich der zitierten DE-102007048471 (A) sind, wie folgt:
Nach der vorliegenden Erfindung vergleicht das System die Intensitäten der Sensoren zur Ermittlung der Strahlmitte nicht wie in diesem Stand der Technik, sondern hat ein empirisch ermitteltes "Abbruchkriterium", welches dem System sagt, dass es jetzt an der Umwandlungseinheit 9 (am Düsenrand) ist. Bei der Erfindung braucht es auch keine speziellen Streuflächen, weshalb keine Abhängigkeit von der Spiegelqualität besteht.

Bei Versuchen mit Prototypen der erfindungsgemässen Laserbearbeitungsmaschine LM wurden insbesondere folgende positive Effekte festgestellt:
- Die reflektierten bzw. umgewandelten Laserarbeitsstrahlen waren gut und präzis mit einer Brennweite von etwa 3,75 - 9 Zoll (95 - 230 mm) messbar;
- Um über die Verschleissfestigkeit der Laserbearbeitungsdüse 3 Aufschluss zu bekommen, wurden mehrere tausend Zentrierungen an der gleichen Umwandlungseinheit 9 gemacht und die Signale aufgezeichnet, sowie die Geometrie der Umwandlungseinheit 9 und der Düse 3 beobachtet. Erkenntnis: Anhand der Messergebnisse konnte weder an der Umwandlungseinheit 9 noch an der Düse 3 oder 3' ein Verschleiss erkannt werden.

Die durch die erfindungsgemässe automatische Düsenzentrierung erreichbaren wesentlichen Vorteile sind, wie folgt:
- Die Zentrierung der Düse erfolgt viel einfacher, schneller und exakter als beim Stand der Technik;
- Der Düsenzentrierungsprozess ist praktisch verschleissfrei und reproduzierbar;
- Das schnelle Ansprechen erlaubt einen Zentrierprozess mit der hohen Laserbetriebsleistung (kW-Bereich), da der primäre Laserarbeitsstrahl 5 rasch abgeschaltet wird, sobald das durch Strahlumwandlung erfasste Messsignal einen gewissen vorbestimmten Wert überschreitet. Die Düse 3 und die Strahlbehandlungseinheit 9 bleiben deswegen auch bei dieser hohen Laserleistung verschleissfrei;
- Unter "schnelle Abschaltung des Laserstrahls" ist gemeint, dass die Reaktionszeit beginnend mit dem Detektieren des Strahls an der ersten Strahlbehandlungseinheit 9 bis zum Befehl "Laser Off" (Laser aus) nicht an die sonst übliche Zykluszeit des CNC-Systems von 16-20 ms gebunden ist, sondern per schnellem "Interrupt-Signal" (Abschaltsignal) unverzüglich, d.h. im Mikrosekundenbereich (z.B. 100 µs) erfolgt. Dank dieses schnellen Abschaltens des Laserarbeitsstrahls 5 erwärmt sich die Düse 3 und die Strahlbehandlungseinheit 9 nur punktuell und kurzfristig. Die unerwünschten Wärmebelastungen der Düse, wie sie beim Stand der Technik auftreten können, sind dadurch eliminiert;
- Wird die erste Strahlbehandlungseinheit 9 an der Düsenöffnung 4 gegenüber dem Laserarbeitsstrahl 5 verschoben (bzw. umgekehrt), so erzeugt der Laserarbeitsstrahl 5 ab dem Zeitpunkt seiner Reflexion bzw. Umwandlung an der ersten Strahlbehandlungseinheit 9 ein Messsignal am Sensor 13, wobei die Steuerung der Maschine LM den Laser rechtzeitig abschaltet, um eventuelle Beschädigungen der Düse 3 und der Strahlbehandlungseinheit 9 zu vermeiden;
- Der mindestens eine vorteilhaft optische Sensor 13 ist nicht in der Nähe des (Schneid-)Prozesses (d.h. nicht in der Nähe der Düsenspitze), sondern relativ weit davon entfernt im Laserbearbeitungskopf 1 angeordnet, was sich vorteilhaft auf die Gebrauchstauglichkeit (Industrietauglichkeit) der Laserbearbeitungsmaschine LM auswirkt;
- Um die Ablenkung des an der Strahlbehandlungseinheit 9 reflektierten bzw. umgewandelten Laserarbeitsstrahls 5 in Richtung des zumindest einen Sensors 13 im Laserbearbeitungskopf 1 standardisiert zu gewährleisten, ist die Strahlbehandlungseinheit 9 eine Umwandlungskante, die ggf. einen Neigungswinkel aufweist;
- Durch die Erfindung kann die Produktionssicherheit und die Arbeitsqualität der Laserbearbeitungsmaschine LM bedeutend erhöht werden.
- Der Zentriermechanismus kann zur axialen Fokusjustage gebraucht werden.
- Wird eine Fokusjustage bei verschiedenen Laserleistungen durchgeführt, lässt sich damit den laserinduzierten thermischen axialen Fokusversatz messen. Letzteres ist ein Mass für die Qualität der Fokussierlinse bzw. der optischen Elemente entlang des optischen Pfades. Unter "Fokusversatz" ist hier einen Versatz gemeint, der aufgrund der thermischen Belastung der Linse (ohne Ändern der Linsenposition) entsteht.

### BEZUGSZEICHENLISTE

LM : Laserbearbeitungsmaschine / Laserschneidmaschine
1 : Laserbearbeitungskopf
1A: Oberer Kopfteil
1B : Unterer Kopfteil
2 : Innenraum
3, 3', 3" : Düse/ Laserbearbeitungsdüse /Zentrierdüse/ Zentrierelement
4 : Düsenöffnung
5 : Primärer fokussierter elektromagnetischer Strahl/ Laserarbeitsstrahl
6 : Werkstück (zu bearbeiten)
7 : Lösbare Verbindung/ Schnellverschluss/ Gewinde/ Passung
8 : Düsenachse
9 : Erste Strahlbehandlungseinheit/ Düsenkante/ Saphirring
10 : Sekundärer elektromagnetischer Strahl / Wärmestrahl oder Streu-Reflexionsstrahl
10A : Ausbreitungsrichtung des sekundären Strahls
11 : Auftreffpunkt
12 : Strahlenreflektor
13 : Sensor/ Wärmestrahlungssensor/ Detektor
14 : Abstand
15 : Ausrichtvorrichtung
16 : CNC-System
17 : Innere Mantelfläche (des Kopfes)
18 : Reflexionsfläche
19 : Winkel
24 : Zweite Strahlbehandlungseinheit/ Glasscheibe
25 : Halterung für Glasscheibe und Wärmestrahlungssensor
26 : Abstand
27 : Aussparung
A : Abstand
d : Verfahrweg
F : Fokus
K : Kurve
L : Fokussierlinse

## Patentansprüche

1. Laserbearbeitungsmaschine (LM), insbesondere Laserschneidmaschine mit langwelliger Laserstrahlung, insbesondere CO2-Laserstrahlung, umfassend wenigstens einen Laserbearbeitungskopf (1), welcher einen Innenraum (2) und eine Düse (3; 3'; 3") mit einer Düsenöffnung (4) zum Durchlassen eines primären Strahles (5) in Form eines fokussierten Laserarbeitsstrahles auf ein zu bearbeitendes Werkstück (6) ausweist, weiter umfassend
eine Ausrichtvorrichtung (15) mit mindestens einem Sensor (13) zum Zentrieren des primären Strahles (5) und der Düsenöffnung (4) relativ zueinander zum Justieren der Fokuslage in lateraler Richtung, wobei
mindestens eine erste Strahlbehandlungseinheit (9), insbesondere im Bereich der Düsenöffnung (4) der Düse bzw. Kalibrationsdüse (3; 3'; 3") vorgesehen ist, welche zur Umwandlung des primären, fokussierten Strahles (5) in einen sekundären elektromagnetischen Strahl, insbesondere einen breitbandigen Wärmestrahls (10) sowie zum Emittieren des sekundären Strahls (10) entlang einer Ausbreitungsrichtung (10A) in Richtung des Sensors (13), oder zum Reflektieren/Streuen mindestens eines Teils des primären, fokussierten Strahls (5) entlang der Ausbreitungsrichtung (10A) als einen sekundären Strahl (10) in Richtung des Sensors (13) geeignet ausgebildet ist, wobei der mindestens eine Sensor (13) zur Detektion des sekundären Strahles (10) innerhalb des Laserbearbeitungskopfes (1) angeordnet ist,
**dadurch gekennzeichnet,**
**dass** die Laserbearbeitungsmaschine weiter umfasst
ein optisches Fokussierelement (L) zum Justieren der Fokuslage des primären Strahles (5) in axialer Richtung ; und
eine CNC-Steuerung (16) zur vorgeschriebenen Positionierung des Fokus (F) des primären elektromagnetischen Strahls (5), insbesondere CO₂-Laserarbeitsstrahls, in Bezug zur Düsenspitze bzw. Düsenöffnung (4) durch Justieren des primären Strahles (5) und/oder der Düse (3; 3'; 3") in lateraler und axialer Richtung, wobei bei der Justierung eine axiale Position des Fokus (F) des primären elektromagnetischen Strahls (5) mittels Düsenzentrierung bestimmt und auf einen vorwählbaren Wert eingestellt wird.

2. Laserbearbeitungsmaschine nach Anspruch 1, **dadurch gekennzeichnet, dass** zur Umwandlung des primären Strahles (5) in einen Wärmestrahl (10) die erste Strahlbehandlungseinheit (9) als ein Umwandlungsring aus Saphir oder Glasmaterial, insbesondere aus Quarzglas (SiO2) ausgebildet ist.

3. Laserbearbeitungsmaschine nach einem der Ansprüche 1 bis 2, **dadurch gekennzeichnet, dass** zur Umwandlung des primären langwelligen Strahles (5) in einen sekundären Wärmestrahl (10) eine zweite Strahlbehandlungseinheit (24) vorzugsweise in Form einer Glasscheibe vor dem mindestens einen Sensor (13) angeordnet ist, welche vorzugsweise mindestens an einer Fläche quer zur Ausbreitungsrichtung (10A) des sekundären Strahles (10) mit einer Reflexionsschicht für den primären Strahl (5) versehen ist, wobei der mindestens eine Sensor (13) als NIR-Sensor zur Detektion der Wärmestrahlung (10) mit Wellenlängenanteilen von ca. 1,0 - 2,2 µm ausgebildet ist.

4. Laserbearbeitungsmaschine nach einem der Ansprüche 1 bis 3, **dadurch gekennzeichnet, dass** zwischen dem Sensor (13) und der ersten Strahlbehandlungseinheit (9) mindestens ein Strahlenreflektor (12) zum Umlenken der von der Strahlbehandlungseinheit (9) entlang ihrer Ausbreitungsrichtung (10A) abstrahlenden sekundären Strahlung (10) auf den Sensor (13) angeordnet ist.

5. Laserbearbeitungsmaschine nach einem der Ansprüche 1 bis 4, **dadurch gekennzeichnet, dass** die Düse eine Laserschneiddüse (3) oder eine diese für den Zentriervorgang ersetzende Zentrierdüse (3') ist, und dass die erste Strahlbehandlungseinheit (9) an einer inneren Mantelfläche (21) der Düse (3; 3') in der Nähe der Düsenöffnung (4) als eine vorspringende Kante vorgesehen ist.

6. Laserbearbeitungsmaschine nach einem der Ansprüche 1 bis 5, **dadurch gekennzeichnet, dass** die erste Strahlbehandlungseinheit (9) mit einer verschleissfesten und/oder umwandlungsbeschleunigenden Beschichtung versehen ist.

7. Laserbearbeitungsmaschine nach einem der Ansprüche 1 bis 6, **dadurch gekennzeichnet, dass** der Sensor (13) zur Überwachung der umgewandelten sekundären Wärmestrahlung (10) mit Wellenlängen von ca. 1,0 - 2,2 µm als "InGaAs"-Diode oder im Sichtbaren als Si-Detektor ausgebildet ist.

8. Laserbearbeitungsmaschine nach einem der Ansprüche 1 bis 6, **dadurch gekennzeichnet, dass** der Sensor (13) zur Überwachung der reflektierte und/oder gestreute sekundäre Strahlung (10) als Thermosäule (Thermopile) oder Infrarotdetektor ausgebildet ist.

9. Laserbearbeitungsmaschine nach einem der Ansprüche 1 bis 8, **dadurch gekennzeichnet, dass** die erste Strahlbehandlungseinheit (9) ausserhalb des Kopfes (1) als externe Einheit, vorzugsweise als Zentrierelement (3") ausgebildet ist.

10. Verfahren zum Justieren eines primären Strahles (5), insbesondere eines fokussierten Laserarbeitsstrahles zu einer Düsenöffnung (4) eines Laserbearbeitungskopfes (1) einer Laserbearbeitungsmaschine (LM) nach einem der Ansprüche 1 bis 9 relativ zueinander, wobei
a) vor oder während einer Laserbearbeitung eine X-Y-Koordinatenebene in einer Normalebene auf eine Düsenachse (8) definiert wird;
b) dass im Inneren der Düse (3; 3') eine erste Strahlbehandlungseinheit (9) vorgesehen wird, an der ein langwelliger IR-Strahl des primären elektromagnetischen Strahles (5) in eine breitbandige Wärmestrahlung als eine sekundäre Strahlung (10) umgewandelt und emittiert und/oder in einen Streu/Reflexstrahl als eine sekundäre Strahlung (10) entlang einer Ausbreitungsrichtung (10A) in Richtung des mindestens einen Sensors (13) umgeleitet wird;
c) dass der primäre elektromagnetische Strahl (5), insbesondere Laserarbeitsstrahl relativ zur Düsenöffnung (4) oder die Düse (3; 3') relativ zum primären elektromagnetischen Strahl (5) quer zur X-Y-Koordinatenebene so lange verschoben wird, bis der primäre elektromagnetische Strahl (5) die erste Strahlbehandlungseinheit (9) trifft und dort wenigstens teilweise als sekundäre Strahlung (10) entlang der Ausbreitungsrichtung (10A) abgestrahlt wird, und auf den mindestens einen Sensor (13) auftritt;
d) und dass jeder durch den sekundären Strahl (10) ermittelte Messwert des mindestens einen Sensor (13) zugehörigen X-Y-Koordinaten der Düsenachse (8) und dem primären Strahles (5) zugeordnet werden;
e) und dass aus mehreren Messwerten gemäss den Schritten c) und d) nach mehreren Verschiebungen durch einen Rechner die jeweilige Position des Zentrums der Düsenöffnung (4) relativ zu jener des primären Strahles (5) errechnet wird;
f) und demgemäss das Zentrum der Düsenöffnung (4) und der primäre elektromagnetische Strahl (5) automatisch relativ zueinander im Sinne des Zentrierens verschoben wird, **dadurch gekennzeichnet, dass**
zur vorgeschriebenen Positionierung des Fokus (F) des primären elektromagnetischen Strahls (5), insbesondere CO₂-Laserarbeitsstrahls in Bezug zur Düsenspitze bzw. Düsenöffnung (4), der primäre Strahl (5) und/oder die Düse (3; 3') in lateraler und axialer Richtung justiert wird, wobei bei der Justierung eine axiale Position des Fokus (F) des primären elektromagnetischen Strahls (5) mittels Düsenzentrierung bestimmt und auf einen vorwählbaren Wert eingestellt wird.

11. Verfahren nach Anspruch 10, **dadurch gekennzeichnet, dass** die axiale Position des Fokus (F) des primären elektromagnetischen Strahls (5) im Bereich der Düsenöffnung (4) oder zu einer vorbestimmten Position in Bezug des zu bearbeitenden Werkstücks eingestellt wird.

12. Verfahren nach einem der Ansprüche 10 bis 11, **dadurch gekennzeichnet, dass** die Fokusjustage des primären elektromagnetischen Strahls (5), insbesondere CO2-Laserarbeitsstrahls bei verschiedenen Laserleistungen durchgeführt wird, und damit den laserinduzierten thermischen axialen Fokusversatz gemessen wird, welches als Mass für die Qualität der Fokussierlinse (L) bzw. der optischen Elemente entlang eines optischen Pfades verwendet wird.

13. Verfahren nach einem der Ansprüche 10 bis 12, **dadurch gekennzeichnet, dass** das Anfahren des Laserarbeitsstrahls (5) durch die Düse (3) mit der inneren Strahlbehandlungseinheit (9) in drei oder vier Achsrichtungen (X+; X-; Y+; Y-) der X-Y-Koordinatenebene durchgeführt wird.

14. Verfahren nach einem der Ansprüche 10 bis 13, **dadurch gekennzeichnet, dass** anstelle des Laserarbeitsstrahls (5) ein leistungsschwächerer Richtstrahl in die Laserbearbeitungsstrahlenachse gelegt wird, wonach dieser relativ zur Düse (4) oder die Düse (4) relativ zu diesem Richtstrahl verstellt wird.

15. Verfahren nach einem der Ansprüche 10 bis 14, **dadurch gekennzeichnet, dass** der fokussierte primäre elektromagnetische Strahl, insbesondere CO2-Laserarbeitsstrahl (5) mit einer Wellenlänge von etwa 10,6 µm, zu einem, für einen NIR-Strahlungssensor (13), insbesondere für eine "InGaAs"-Diode sichtbaren sekundären Wärmestrahl (10) mit Wellenlängen von etwa 1,0 - 2,2 µm umgewandelt wird; und dass diese Umwandlung an der ersten Strahlbehandlungseinheit (9) und/oder an einer zweiten Strahlbehandlungseinheit (24) in Form einer reflexbeschichteten Glasscheibe vor dem NIR-Strahlungssensor (13) erfolgt.

## Claims

1. A laser processing machine (LM), in particular a laser cutting machine with long-wave laser radiation, in particular CO2 laser radiation, comprising at least one laser processing head (1) which has an interior (2) and a nozzle (3; 3'; 3") having a nozzle opening (4) for the passage of a primary beam (5) in the form of a focused laser working beam on a workpiece (6) to be processed, further comprising an alignment device (15) having at least one sensor (13) for centring the primary beam (5) and the nozzle opening (4) relative to each other for adjusting the focus position in the lateral direction, wherein at least one first beam processing unit (9) is provided, in particular in the region of the nozzle opening (4) of the nozzle or calibration nozzle (3; 3'; 3"), which is suitably designed for converting the primary, focused beam (5) into a secondary electromagnetic beam, in particular a broadband heat beam (10) and for emitting the secondary beam (10) in a direction of propagation (10a) in the direction of the sensor (13) or for reflecting/scattering at least part of the primary, focused beam (5) in the direction of propagation (10a) as a secondary beam (10) in the direction of the sensor (13), wherein the at least one sensor (13) is arranged within the laser processing head (1) for detecting the secondary beam (10), **characterised in that** the laser processing machine further comprises an optical focusing element (L) for adjusting the focus position of the primary beam (5) in the axial direction; and a CNC controller (16) for the prescribed positioning of the focus (F) of the primary electromagnetic beam (5), in particular CO₂ laser processing beam, in relation to the nozzle tip or nozzle opening (4) by adjusting the primary beam (5) and/or the nozzle (3; 3'; 3") in the lateral and axial directions, wherein, during the adjustment, an axial position of the focus (F) of the primary electromagnetic beam (5) is determined by means of nozzle centring and adjusted to a pre-selectable value.

2. The laser processing machine according to claim 1, **characterised in that**, to convert the primary beam (5) into a heat beam (10), the first beam processing unit (9) is designed as a conversion ring made of sapphire or glass material, in particular quartz glass (SiO2).

3. The laser processing machine according to any one of claims 1 to 2, **characterised in that**, to convert the primary long-wave beam (5) into a secondary heat beam (10), a second beam processing unit (24), preferably in the form of a glass pane, is arranged in front of the at least one sensor (13), which, on at least one surface transverse to the direction of propagation (10A) of the secondary beam (10), is preferably provided with a reflection layer for the primary beam (5), wherein the at least one sensor (13) is formed as an NIR sensor for detecting the heat radiation (10) with wavelength components of approximately 1.0-2.2 µm.

4. The laser processing machine according to any one of claims 1 to 3, **characterised in that**, between the sensor (13) and the first beam processing unit (9), at least one radiation reflector (12) for deflecting the secondary radiation (10) emitted by the beam processing unit (9) in the direction of propagation (10A) thereof is arranged on the sensor (13).

5. The laser processing machine according to any one of claims 1 to 4, **characterised in that** the nozzle is a laser cutting nozzle (3) or a centring nozzle (3') replacing said laser cutting nozzle for the centring process, and **in that** the first beam processing unit (9) is provided as a projecting edge on an inner lateral surface (21) of the nozzle (3; 3') in the vicinity of the nozzle opening (4).

6. The laser processing machine according to any one of claims 1 to 5, **characterised in that** the first beam processing unit (9) is provided with a wear-resistant and/or conversion-accelerating coating.

7. The laser processing machine according to any one of claims 1 to 6, **characterised in that** the sensor (13) for monitoring the converted secondary heat radiation (10) with wavelengths of approximately 1.0-2.2 µm is designed as an 'InGaAs' diode or, in the visible range, as an Si detector.

8. The laser processing machine according to any one of claims 1 to 6, **characterised in that** the sensor (13) for monitoring the reflected and/or scattered secondary radiation (10) is designed as a thermopile or infrared detector.

9. The laser processing machine according to any one of claims 1 to 8, **characterised in that** the first beam processing unit (9) outside the head (1) is designed as an external unit, preferably as a centring element (3").

10. A method for adjusting a primary beam (5), in particular a focused laser working beam to a nozzle opening (4) of a laser processing head (1) of a laser processing machine (LM) according to any one of claims 1 to 9 relative to one another, wherein
a) an XY coordinate plane is defined in a normal plane on a nozzle axis (8) before or during laser processing;
b) that in the interior of the nozzle (3; 3') a first beam processing unit (9) is provided, on which a long-wave IR beam of the primary electromagnetic beam (5) is converted into broadband heat radiation as a secondary radiation (10) and is emitted and/or diverted into a scattered/reflected beam as a secondary radiation (10) in a direction of propagation (10A) in the direction of the at least one sensor (13);
c) that the primary electromagnetic beam (5), in particular laser working beam is displaced relative to the nozzle opening (4) or the nozzle (3; 3') is displaced relative to the primary electromagnetic beam (5) transversely to the XY coordinate plane until the primary electromagnetic beam (5) reaches the first beam processing unit (9) and is at least partially emitted there as secondary radiation (10) in the direction of propagation (10A), and impinges on the at least one sensor (13);
d) and that each measured value, determined by the secondary beam (10), of the at least one sensor (13) is assigned to associated XY coordinates of the nozzle axis (8) and the primary beam (5);
e) and that the position of the centre of the nozzle opening (4) relative to that of the primary beam (5) is calculated by a computer from a plurality of measured values in accordance with steps c) and d) after a plurality of displacements;
f) and the centre of the nozzle opening (4) and the primary electromagnetic beam (5) are accordingly automatically displaced relative to one another in the sense of centring, **characterised in that**, for the prescribed positioning of the focus (F) of the primary electromagnetic beam (5), in particular CO₂ laser working beam, in relation to the nozzle tip or nozzle opening (4), the primary beam (5) and/or the nozzle (3; 3') is adjusted in the lateral and axial directions, wherein, during the adjustment, an axial position of the focus (F) of the primary electromagnetic beam (5) is determined by means of nozzle centring and adjusted to a pre-selectable value.

11. The method according to claim 10, **characterised in that** the axial position of the focus (F) of the primary electromagnetic beam (5) is adjusted in the region of the nozzle opening (4) or to a predetermined position in relation to the workpiece to be processed.

12. The method according to any one of claims 10 to 11, **characterised in that** the focus adjustment of the primary electromagnetic beam (5), in particular CO2 laser working beam is carried out at different laser powers, and thus the laser-induced thermal axial focus offset is measured, which is used as a measure of the quality of the focusing lens (L) or of the optical elements along an optical path.

13. The method according to any one of claims 10 to 12, **characterised in that** the approach of the laser working beam (5) through the nozzle (3) with the inner beam processing unit (9) is carried out in three or four axial directions (X+; X-; Y+; Y-) of the XY coordinate plane.

14. The method according to any one of claims 10 to 13, **characterised in that**, instead of the laser working beam (5), a less powerful directional beam is placed in the laser processing beam axis, after which same is adjusted relative to the nozzle (4) or the nozzle (4) is adjusted relative to said directional beam.

15. The method according to any one of claims 10 to 14, **characterised in that** the focused primary electromagnetic beam, in particular a CO2 laser working beam (5), having a wavelength of approximately 10.6 µm, is converted into a secondary heat beam (10), having wavelengths of approximately 1.0-2.2 µm and visible for an NIR radiation sensor (13), in particular for an 'InGaAs' diode; and that this conversion takes place at the first beam processing unit (9) and/or at a second beam processing unit (24) in the form of a reflective-coated glass pane in front of the NIR radiation sensor (13).

## Revendications

1. Machine de traitement au laser (LM), en particulier machine de coupe au laser avec rayonnement laser à ondes longues, et singulièrement rayonnement laser CO2, comprenant au moins une tête de traitement au laser (1) présentant un espace intérieur (2) et une buse (3 ; 3' ; 3 ") avec une ouverture de buse (4) permettant le passage d'un faisceau primaire (5) sous forme d'un faisceau laser focalisé sur une pièce (6) à usiner, comprenant en outre un dispositif d'alignement (15) avec au moins un capteur (13) pour centrer le faisceau primaire (5) et l'ouverture de buse (4) l'un par rapport à l'autre pour ajuster la position de focalisation dans le sens latéral, au moins une première unité de transformation du faisceau (9) étant prévue, en particulier dans la zone d'ouverture (4) de la buse ou buse de calibrage (3 ; 3' ; 3"), ladite unité étant utilisée pour transformer le faisceau primaire focalisé (5) en un faisceau secondaire électromagnétique, singulièrement un faisceau thermique à large bande (10) et pour émettre le faisceau secondaire (10) le long d'une direction de propagation (10A) en direction du capteur (13) ou pour réfléchir/diffuser au moins une partie du faisceau primaire focalisé (5) le long de la direction de propagation (10A) et étant formée de manière appropriée en tant que faisceau secondaire (10) en direction du capteur (13), au moins un capteur (13) pour détecter le faisceau secondaire (10) étant disposé à l'intérieur de la tête de traitement au laser (1), **caractérisée en ce que** la machine de traitement au laser comprend en outre un élément de focalisation optique (L) pour ajuster la position de focalisation du faisceau primaire (5) dans la direction axiale ; et une commande CNC (16) pour le positionnement prescrit du foyer (F) du faisceau électromagnétique primaire (5), en particulier du faisceau de traitement au laser CO₂, par rapport à la pointe de buse ou à l'ouverture de buse (4) en ajustant le faisceau primaire (5) et/ou la buse (3 ; 3' ; 3") dans les directions latérale et axiale, lors de l'ajustage, une position axiale du foyer (F) du faisceau électromagnétique primaire (5) étant déterminée au moyen de l'ajustage de la buse et étant réglée sur une valeur sélectionnable au préalable.

2. Machine de traitement au laser selon la revendication 1, **caractérisée en ce que** pour transformer le faisceau primaire (5) en un faisceau thermique (10), la première unité de transformation du faisceau (9) est conçue comme un anneau de transformation en saphir ou en verre, et singulièrement en verre de quartz (SiO2).

3. Machine de traitement au laser selon l'une des revendications 1 à 2, **caractérisée en ce que** pour transformer le faisceau primaire à ondes longues (5) en un faisceau thermique secondaire (10), une deuxième unité de transformation du faisceau (24), de préférence sous forme de vitre, est disposée devant au moins un capteur (13), ladite vitre étant de préférence pourvue sur au moins une surface transversale à la direction de propagation (10A) du faisceau secondaire (10) d'une couche de réflexion pour le faisceau primaire (5), au moins un capteur (13) étant conçu comme capteur NIR pour détecter le rayonnement thermique (10) avec des composantes de longueur d'onde d'environ 1,0 à 2,2 µm.

4. Machine de traitement au laser selon l'une des revendications 1 à 3, **caractérisée en ce qu'**entre le capteur (13) et la première unité de transformation du faisceau (9) au moins un réflecteur de faisceau (12) est disposé sur le capteur (13) pour dévier le rayonnement secondaire (10) émis par l'unité de transformation du faisceau (9) selon sa direction de propagation (10A).

5. Machine de traitement au laser selon l'une des revendications 1 à 4, **caractérisée en ce que** la buse est une buse de coupe au laser (3) ou une buse de centrage (3') la remplaçant pour le processus de centrage et **en ce que** la première unité de transformation du faisceau (9) est prévue sur une surface périphérique interne (21) de la buse (3 ; 3') au voisinage de l'ouverture de buse (4) sous forme d'une arête saillante.

6. Machine de traitement au laser selon l'une des revendications 1 à 5, **caractérisée en ce que** la première unité de transformation du faisceau (9) est pourvue d'un revêtement résistant à l'usure et/ou accélérant la transformation.

7. Machine de traitement au laser selon l'une des revendications 1 à 6, **caractérisée en ce que** le capteur (13) pour surveiller le rayonnement thermique secondaire transformé (10) avec des longueurs d'onde d'environ 1,0 - 2,2 µm est conçu comme une diode « InGaAs », ou dans la plage visible, comme un détecteur de Si.

8. Machine de traitement au laser selon l'une des revendications 1 à 6, **caractérisée en ce que** le capteur (13) est conçu comme un détecteur à thermopile (pile thermo-électrique) ou infrarouge pour surveiller le rayonnement secondaire réfléchi et/ou diffusé (10).

9. Machine de traitement au laser selon l'une des revendications 1 à 8, **caractérisée en ce que** la première unité de transformation du faisceau (9) à l'extérieur de la tête (1) est conçue comme unité externe, de préférence comme un élément de centrage (3").

10. Procédé pour ajuster un faisceau primaire (5), en particulier un faisceau de traitement au laser focalisé sur une ouverture de buse (4) d'une tête de traitement au laser (1) d'une machine de traitement au laser (LM) selon l'une des revendications 1 à 9 l'un par rapport à l'autre, dans lequel
a) un plan de coordonnées X-Y est défini dans un plan normal sur un axe de buse (8) avant ou pendant le traitement au laser ;
b) qu'une première unité de transformation du faisceau (9) est prévue à l'intérieur de la buse (3 ; 3'), sur laquelle un faisceau infrarouge à ondes longues du faisceau électromagnétique primaire (5) est transformé en rayonnement thermique à large bande en tant que rayonnement secondaire (10) et émis et/ou est détourné en un faisceau diffusé/réfléchi en tant que rayonnement secondaire (10) le long d'une direction de propagation (10A) en direction d'au moins un capteur (13) ;
c) que le faisceau électromagnétique primaire (5), en particulier le faisceau de traitement au laser par rapport à l'ouverture de buse (4) ou la buse (3 ; 3') par rapport au faisceau électromagnétique primaire (5) est déplacé transversalement au plan de coordonnées X-Y jusqu'à ce que le faisceau électromagnétique primaire (5) frappe la première unité de transformation du faisceau (9) et y soit au moins partiellement émis sous forme de rayonnement secondaire (10) le long de la direction de propagation (10A) et frappe au moins un capteur (13) ;
d) et que chaque valeur mesurée d'au moins un capteur (13) déterminée par le faisceau secondaire (10) soit attribuée à des coordonnées X-Y associées de l'axe de buse (8) et du faisceau primaire (5) ;
e) et que la position respective du centre de l'ouverture de buse (4) par rapport à celle du faisceau primaire (5) est calculée par un ordinateur à partir d'une pluralité de valeurs mesurées selon les étapes c) et d) après un certain nombre de déplacements ;
f) et en conséquence le centre d'ouverture de la buse (4) et le faisceau électromagnétique primaire (5) sont automatiquement décalés l'un par rapport à l'autre dans le sens du centrage, **caractérisé en ce que** pour le positionnement prescrit du foyer (F) du faisceau électromagnétique primaire (5), en particulier du faisceau de traitement au laser CO₂ par rapport à la pointe de buse ou à l'ouverture de buse (4), le faisceau primaire (5) et/ou la buse (3 ; 3') est ajusté dans les directions latérale et axiale, lors de l'ajustage, une position axiale du foyer (F) du faisceau électromagnétique primaire (5) étant déterminée au moyen du centrage de la buse et réglée à une valeur sélectionnable au préalable.

11. Procédé selon la revendication 10, **caractérisé en ce que** la position axiale du foyer (F) du faisceau électromagnétique primaire (5) est définie dans la zone de l'ouverture de buse (4) ou vers une position prédéterminée par rapport à la pièce à usiner.

12. Procédé selon l'une des revendications 10 à 11, **caractérisé en ce que** l'ajustement de focalisation du faisceau électromagnétique primaire (5), et singulièrement du faisceau de traitement au laser CO2 est effectué à différentes puissances laser et, ainsi, le décalage de focalisation axiale thermique induit par laser est mesuré, lequel est utilisé comme une mesure de la qualité de la lentille de focalisation (L) ou des éléments optiques le long d'un chemin optique.

13. Procédé selon l'une des revendications 10 à 12, **caractérisé en ce que** l'approche du faisceau de traitement au laser (5) à travers la buse (3) avec l'unité de transformation du faisceau interne (9) est réalisée dans trois ou quatre directions axiales (X+ ; X- ; Y+ ; Y-) du plan de coordonnées X-Y.

14. Procédé selon l'une des revendications 10 à 13, **caractérisé en ce qu'**au lieu du faisceau de traitement au laser (5), un faisceau directionnel moins puissant est placé dans l'axe du faisceau de traitement au laser, et est réglé après quoi par rapport à la buse (4) ou la buse (4) est réglée par rapport à ce faisceau directionnel.

15. Procédé selon l'une des revendications 10 à 14, **caractérisé en ce que** le faisceau électromagnétique primaire focalisé, et singulièrement un faisceau de traitement au laser CO2 (5) d'une longueur d'onde d'environ 10,6 µm, est transformé en un faisceau thermique secondaire visible pour un capteur de rayonnement NIR (13), notamment pour une diode « InGaAs » avec des longueurs d'onde d'environ 1,0 à 2,2 µm ; et que cette transformation a lieu sur la première unité de transformation du faisceau (9) et/ou sur une deuxième unité de transformation du faisceau (24) sous forme d'une vitre réfléchissante devant le capteur de rayonnement NIR (13).
